# EUROPEAN PATENT SPECIFICATION

(11) **EP 2 348 077 B1**
(45) Date of publication and mention of the grant of the patent: **03.04.2013**
(21) Application number: 10250124.4
(22) Date of filing: 26.01.2010
(51) Int. Cl.: C09D 5/16, C08L 101/02, C08L 45/00, C09D 201/02, C09D 145/00

(54) **Antifouling composition**
Fäulnisverhindernde Zusammensetzung
Composition antisalissure

(43) Date of publication of application: 27.07.2011
(73) Proprietor: Jotun A/S, 3248 Sandefjord (NO)
(72) Inventor: Dahling, Marit, 3202 Sandefjord (NO); Hansen, Terje, 3202 Sandefjord (NO); Johnsen, Henning, 3202 Sandefjord (NO); Risberg, Erik, 3202 Sandefjord (NO)
(74) Representative: Campbell, Neil Boyd

(56) References cited:
- EP-A2- 0 247 019
- EP-A2- 1 072 625
- DATABASE WPI Week 200926 Thomson Scientific, London, GB; AN 2009-F86525 XP002586947 & WO 2009/031509 A1 (CHUGOKU MARINE PAINTS LTD) 12 March 2009 (2009-03-12)

## Description

This invention relates to antifouling paints containing hydrocarbon resins and their use in modifying advantageously the properties of the antifouling paint.

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economical consequences. The fouling may lead to biological degradation of the surface, increased load and accelerated corrosion. On vessels the fouling will increase the frictional resistance which will cause reduced speed and/or increased fuel consumption. It can also result in reduced manoeuvrability.

To prevent settlement and growth of marine organisms antifouling paints are used. These paints generally comprise a film-forming binder, together with different components such as pigments, fillers, solvents and biologically active substances.

EP-A-0247019 describes an antifouling and anticorrosive coating composition comprising (i) a base vehicle formed from an epoxy resin and a substance selected from aromatic pitch-containing materials and thermoplastic hydrocarbon resins, (ii) a curing agent for the epoxy resin, and (iii) a mixture of antifouling biocides essentially comprising zinc oxide, a triorganotin salt, a metallic salt of an alkylene dithiocarbamic acid and a cuprous compound selected from cuprous oxide and cuprous thiocyanate, the amount of the cuprous compound being no greater than 7% by volume.

EP-A-1072625 describes a polyester resin for an antifouling paint.

One broad group of biocidal antifouling coatings on the market today is the self-polishing antifouling coatings. Those antifouling coatings are based on (meth)acrylic copolymers having pendant hydrolysable groups. In seawater the polymer is gradually hydrolysed. The remaining acrylic copolymer, now containing carboxylic acid groups, becomes sufficiently soluble or dispersible in seawater to be washed out or eroded away from the coating surface. This self-polishing effect provided a controlled release of the biologically active compounds in the coating resulting in the excellent antifouling efficiency and smooth surfaces and hence reduced frictional resistance. The most successful self-polishing antifouling systems today are based on silyl ester functional (meth)acrylic copolymers. These coating compositions are for example described in EP 0 646 630, EP 1 342 756, EP 1 479 737, EP 1 641 862, WO 00/77102, WO 03/080747, WO 2009/007276 and WO 2009/149919. Another common group of self-polishing antifouling systems on the market today are based on metal carboxylate copolymers. These coating compositions are for example described in EP 0 204 456, EP 0 260 958, GB 2 311 070, EP 0 779 304, EP 1 006 156 and EP 1 138 725.

WO2009031509 describes an antifouling coating composition comprising (A) at least one hydrolyzable copolymer selected from the group consisting of specific metal salt linkage containing copolymers and silyl ester copolymers, (b1) copper and/or an inorganic copper compound (b1), and (C) zinc oxide, characterized in that (1) the contents of the antifouling agent (B) and zinc oxide (C) are 100 to 400 parts by weight and 50 to 350 parts by weight respectively per 100 parts by weight of the hydrolysable copolymer (A) and (2) the weight ratio of zinc oxide (C) to copper and/or inorganic copper compound (b1) (zinc oxide (C)/(copper and/or inorganic copper compound (b1))) is 0.6 to 1.2.

Antifouling coatings containing silyl ester copolymers as binder are often modified by cobinders or other materials in order to adjust properties, such as film properties and polishing rates. The binder component as a whole imparts adhesion, binds the pigments together, and strongly influences such properties as flexibility and toughness.

The most commonly used modifier is rosin and its derivatives as described in EP-A-0802243. Other modifiers include monocarboxylic acid containing materials and their metal salts (EP-A-1342756), chlorinated paraffins (EP0775733), hydrophilic copolymers comprising lactam or amide groups (EP 1127925), metal carboxylate group containing polymers (EP-A-1277816) , fibres (WO 00/77102) and incompatible polymers as described in WO 03/070832.

Rosin is commonly used in antifouling coatings as a binder and modifier. Rosin is a natural product obtained from pine trees which means that its consistency can vary depending on the source of the rosin. Different rosins grown under differing weather conditions give different product characteristics but as it is cheap rosin is still favoured in the industry.

The present inventors are seeking a cheap and convenient new binder which give rise to at least the same valuable properties but which can be made synthetically and hence readily on an industrial scale. The inventors have identified hydrocarbon resins as being an ideal co-binders/modifiers for antifouling coating compositions. Hydrocarbon resins are not suitable as the sole binder in a coating rather hydrocarbon resins are used as cobinders/modifiers for other binders.

Hydrocarbon resins are commonly used in anticorrosive coatings, as the resins have good resistance to water, salt solutions, alkalis and diluted acids. The present inventors have realised however that they are of use as modifiers in self-polishing antifouling paint coatings.

The inventors have surprisingly found that hydrocarbon resins can be used to adjust the polishing rates of antifouling coatings containing hydrolysable resins, such as organosilicon ester group containing polymers, metal carboxylate containing polymer and polyoxalates.

Thus, it has now been found that certain hydrocarbon resins typically derived from petroleum which have optionally been suitably modified form excellent modifiers of paint properties and together with the hydrolysable copolymer form a valuable binder component for antifouling coatings.

Thus, viewed from one aspect the invention provides an antifouling coating composition comprising:
(I) a binder component comprising at least one hydrolysable copolymer and at least one hydrocarbon resin wherein the total amount of hydrocarbon resin forms 1 to 50 wt% of the binder component (I); and
(II) at least one an antifouling agent;
wherein said hydrocarbon resin comprises a resin formed by the polymerisation of at least one of a C5 aliphatic monomer, a C9 aromatic monomer, an indene coumarone monomer, or a terpene monomer.

Viewed from another aspect the invention provides a process for protecting an object from fouling comprising coating at least a part of said object which is subject to fouling with an antifouling coating composition as hereinbefore described.

Viewed from another aspect the invention provides an object coated with an antifouling coating composition as hereinbefore defined.

The term binder component is a term of this art. The binder is the actual film forming component of an antifouling coating composition.

Thus, viewed from a further aspect the invention provides a binder comprising at least one hydrolysable copolymer and at least one hydrocarbon resin wherein the total amount of hydrocarbon resin forms 1 to 50 wt% of the binder component wherein said hydrocarbon resin comprises a resin formed by the polymerisation of at least one of a C5 aliphatic monomer, a C9 aromatic monomer, an indene coumarone monomer, or a terpene monomer.

In this invention the binder component is preferably formed from the hydrolysable copolymer component and the hydrocarbon resin component only.

### Hydrocarbon resin

The hydrocarbon resins of use in the invention are typically individual homopolymers or copolymers or blends thereof. This technical field has a standard ASTM D6440-05 which offers definitions of many of the terms used in this application to which the skilled man can refer for clarification. These hydrocarbon resins are typically thermoplastic. These hydrocarbon resins are typically of low molecular weight. The hydrocarbon resins of use in the invention generally have number average molecular weights (Mn) ranging from 250 to 3,000 g/mol, preferably 300 to 2500 g/mol, more preferably 350 to 1500 g/mol. The resins may also have softening points up to 180°C determined by the Ring and Ball Method (ASTM D 6493 or ASTM E 28). It is within the scope of the invention therefore for the resins to take the form of a solid or a liquid.

These resins are preferably synthetic, i.e. they are not derived from a living organism rather they are derived from petroleum. Moreover, the resins are typically polymeric and are formed by the homo or copolymerisation of suitable monomers. Ideally the resins are thermoplastic.

The hydrocarbon resin is formed by the polymerisation of at least one of a C5 aliphatic monomer, a C9 aromatic monomer, an indene coumarone monomer, or a terpene monomer. Accordingly, other hydrocarbon monomers, can be used in the polymerisation reaction however at least one monomer which is a C5 aliphatic monomer, or a C9 aromatic monomer, or an indene coumarone monomer, or a terpene monomer must be present.

Subject to the polar modifications described in further detail below, it is preferred if the hydrocarbon resins of the invention are formed in a polymerisation reaction in which only monomers which are C5 aliphatic monomers, and/or C9 aromatic monomers, and/or indene coumarone monomers, and/or terpene monomers are present. Preferably therefore, no monomers not meeting these definitions should be used to manufacture the hydrocarbon resins other than those used to modify resin properties as described below.

Where a mixture of monomers is used it is preferred if each monomer forms at least 5 wt% of the starting mixture, preferably at least 10 wt%. Ideally at least 5 wt%, preferably 10 wt% of that monomer forms part of the final resin.

The hydrocarbon resins of the invention are therefore typically characterised by reference to the starting monomer(s) used for their manufacture. The resins of the invention preferably incorporate one or more monomers from the "C5 aliphatic" or "C9 aromatic" fraction of petroleum. These terms are well known in this art as confirmed in ASTM D6440-05.

Thus C5 aliphatic resins are formed by the polymerisation of one or more C5 monomers only and C9 aromatic resins are formed by the polymerisation of one or more monomers from the C9 aromatic petroleum fraction only.

It should be noted that monomers from the C9 aromatic petroleum fraction do not necessarily have 9 carbon atoms. It is preferred if such monomers have 8 to 10 carbon atoms, preferably 9 carbon atoms.

Monomers from the C5 aliphatic petroleum fraction may contain 5 to 6 carbon atoms, especially 5 carbon atoms.

These C5 and C9 monomers can of course be combined to provide a wide variety of different hydrocarbon resins. The hydrocarbon resins of use in the invention can therefore be formed from one or more aromatic "C9 monomers" or one or more aliphatic "C5 monomers" or a mixture of C5 aliphatic and C9 aromatic monomers. Resins formed from at least one C5 aliphatic monomer and at least one C9 aromatic monomer are called C5/C9 hydrocarbon resins herein.

The monomers used for making the hydrocarbon resins of use in the invention are preferably polymerisable components of the "C9 fraction", for example alkylaromatic mono-olefins with 8-10 carbon atoms. Preferred monomers are vinyltoluenes, methylstyrenes such as alpha-methylstyrene, methyltoluenes such as alpha-methyltoluene, styrene, methylindenes and indene.

In compounds such as vinyl toluene or methylindene it will be appreciated that the methyl group can be located anywhere on the ring in question.

It is possible to use one or more of these monomers to manufacture a hydrocarbon resin of the invention.

Other preferred monomers include polymerisable components of the "C5 fraction", such as aliphatic olefins, such as isoprene, isoamylene, piperylene, methylbutenes, pentenes, pentadienes, cyclopentene and butadiene.

The term C5 aliphatic monomer is used herein to denote either a non cyclic (i.e. branched or linear) monomer from the "C5 fraction" containing 4 to 6 carbon atoms) or cyclopentene. The C5 monomers are preferably not alpha olefins. Many C5 and C9 hydrocarbon resins can be produced having slightly different properties by mixing C5 and C9 monomers together in certain ratios.

In addition to a C5 aliphatic monomer or C9 aromatic monomer (or other monomer), a further option is the use of a cyclic C5 diene or dimer as a comonomer such as cyclopentadiene (and its dimer DCPD), or methylcyclopentadienes, (and its dimer methyl-DCPD). Such monomers can be present in copolymeric hydrocarbon resins of the invention however this is not preferred.

The invention does not encompass hydrocarbon resins made exclusively from cyclic C5 diene or dimer monomers. The terms C5 aliphatic monomer or C9 aromatic monomer do not cover cyclic C5 dienes or dimers. It is appreciated that some C9 aromatic fractions may include DCPD but the hydrocarbon resin of this invention cannot be formed exclusively from DCPD. The term C9 aromatic monomer therefore excludes DCPD.

Ideally, therefore the hydrocarbon resins of the invention will not include cyclic C5 diene or dimer monomers such as cyclopentadiene or dimers thereof. It is believed that these monomers give rise to unfavourable coatings. In particular, resins involving cyclic C5 diene or dimer monomers, e.g. DCPD, as a major monomer, e.g. 100% DCPD, show high bromine numbers of ca. 65-100 and even higher, which are heat- and oleo-reactive. Such high bromine numbers are not favoured as the resins are more susceptible to oxidation upon storage. Pure DCPD resins may also be quite rigid which may have a negative effect on viscosity.

Thus, if such a monomer is used in the manufacture of the hydrocarbon resins of the invention, it is preferred if they form a minor monomer, e.g. 35 wt% or less of the monomers used.

Even if a lower amount of such monomers is used, it is additionally preferred to avoid combining these monomers with a substantial amount of aromatic unsaturated components e.g. the C9 aromatic fraction. Such a resin may have a bromine number of 55-75g Br/100g, i.e. higher degree of reactivity compared with standard, hydrocarbon resins having bromine numbers in the range of ca. 10-45.

It is especially preferred therefore that the bromine number of the hydrocarbon resin is less than 65g Br/100g, preferably less than 55g Br/100g, especially less than 45g Br/100g (measured according to ASTM PD1159). A lower bromine number is indicative of less unsaturation in the resin.

Alternatively viewed, the iodine number of the resins of the invention should be less than 150g /100g, more preferably less than 120g / 100g, especially less than 100 g/100g (measured according to ASTM 1959)

If used therefore, any cyclic C5 dimer or diene monomers are preferably combined with aliphatic C5 monomers although in the most preferred embodiment these cyclic C5 dimer or diene monomers are not used at all.

A further option for the hydrocarbon resins of the invention are terpene resins. Such compounds can be formed by polymerisation of terpene monomers such as pinene (e.g. alpha or beta-pinene), dipentenes (i.e. limonenes) alone or with other monomers such as those of C9 fraction or especially aliphatic C5 monomers described above. In particular terpene hydrocarbon resins may be formed from the copolymerisation of a terpenic monomer with styrenes, piperylene and isoprene.

Terpene monomers of use in this invention are non aromatic cyclic monomers having 8 to 12 carbon atoms, preferably 9 to 11 carbon atoms and one double bond. Said double bond can be within the cyclic ring or exocyclic. The ring is preferably 6 membered.

The term polyterpene is used herein to denote a hydrocarbon resin formed from terpene monomer units only. If terpene monomers are combined with other monomers then the hydrocarbon will be noted C5/terpene or C9/terpene and so on.

A further option which can be used according to the invention is an indene coumarone resin. The term "hydrocarbon resin" as used herein is intended to cover these indene coumarone resins although it is appreciated that they contain an O atom. Nevertheless, as this O atom forms part of a ring and the lone pair can delocalise, this material is still regarded as "non polar" and is within the scope of the term hydrocarbon resin used herein.

These indene coumarone resins are formed using an indene monomer such as indene or methylindene and a coumarone monomer such as one having the skeleton of formula (I)

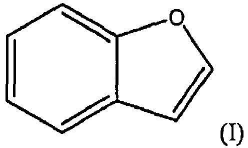

It is also possible for the rings to carry a methyl substituent at any position.

As above, indene coumarone monomers can be combined with the other monomers discussed herein to form potentially valuable polymeric resins. The term indene coumarone resin is therefore used herein to denote a resin formed purely from indene coumarone monomer units. Where other comonomers are employed the designation given will be C5/indene coumarone, C5/C9/indene coumarone and so on.

Various C5, C9, C5/C9, indene coumarone, terpene resins are known in other fields and are commercial products. These can be purchased on the open market and, for example are obtainable under the trade name Novares®, Necires®, Escorez®, Norsolene®, Wingtack® and Sylvares®.

The hydrocarbon resin is preferably formed only from the polymerisation of at least one monomer selected from a C5 aliphatic monomer, a C9 aromatic monomer, an indene coumarone monomer, or a terpene or mixtures thereof.

The hydrocarbon resin is preferably a C5 hydrocarbon resin, a C9 hydrocarbon resin, a C5/C9 hydrocarbon resin or an indene-coumarone resin.

The hydrocarbon resin preferably comprises a mixture of a C5 and a C9 hydrocarbon resins.

It is within the scope of the invention to modify a hydrocarbon resins by hydrogenation. Hydrogenation leads to less unsaturation and hence lower bromine numbers.

It is preferred if the hydrocarbon resins used in the invention are not further modified. The resins are therefore "non polar" i.e. they do not contain any atoms other than C and H (or O for the indene-coumarone embodiment). They are therefore free from groups regarded chemically as polar such as hydroxyl, carboxyl and ester groups. Such hydrocarbon resins will be called "unmodified" hydrocarbon resins herein.

In an alternative embodiment however, hydrocarbon resins can be modified to carry polar substituents such as hydroxyl, carboxyl or ester groups. Such resins will be called "modified" hydrocarbon resins herein. For example, hydrocarbon resins can be modified using phenol or maleic anhydride to introduce hydroxyl or carboxyl functionalities in the polymer. Such modification is well known in the art.

Functional groups that could be present therefore include OH, COOH or esters, e.g. COOR where R is an alkyl group such as a C1-6 alkyl, preferably ethyl or methyl. These polar groups can be presented in their native form or, if possible as a salt, e.g. an alkali metal salt.

It is preferred if any acid modified resin of the invention has an acid value of less than 200 mgKOH/g, preferably less than 100 mgKOH/g, more preferably less than 50 mgKOH/g (ASTM D 974).

It is preferred if any hydroxy modified resin of the invention has a hydroxyl value less than 200 mgKOH/g, more preferably less than 150 mgKOH/g, especially less than 100 mgKOH/g (ASTM E 222).

Typically there will be less than one polar functionality per molecule (preferably less than one, OH, COOH or ester group per molecule).

In a highly preferred embodiment the invention can employ a blend of unmodified hydrocarbon resin with a modified hydrocarbon resin. It is believed that the overall hydrophobicity of the binder component might be important to maximise the properties of the antifouling coating. The use of an unmodified hydrocarbon with more modified hydrocarbon in differing amounts offers the skilled man the option of manipulating the hydrophilicity of the binder component.

Depending on the nature of the hydrolysable component of the binder, different resins can be used to adjust the overall hydrophilicity of the binder component. Thus, more polar hydrolysable binder components can be combined with unmodified hydrocarbon resins and vice versa.

The hydrocarbon resins (which term includes any hydrocarbon resins which may be present) may form from 1 to 50%, preferably 1 to 35%, more preferably 2.5 to 25 wt%, especially 5 to 15 wt% of the total binder component.

Ideally, the binder component is formed from the sum of hydrolysable copolymer components and the sum of all hydrocarbon resin components only.

### Hydrolysable binder

As well as the hydrocarbon resin hereinbefore described, the antifouling coating of the invention contains at least one hydrolysable binder such as an organosilicon ester group containing polymer or metal carboxylate containing polymer. The use of hydrolysable copolymer binders such as silyl ester copolymers and metal carboxylate copolymers in antifouling coatings is well known and any of these well known hydrolysable binders can be used.

For example, EP-A-1921119 describes hydrolysable copolymers based on copolymers containing a metal salt which is an acrylic polymer or polyester resin and has a side chain terminal group including COO-M-OCO- where M is a Zn or Cu. Such hydrolysable copolymers could be used in the present invention.

EP-A-1072625 describes the use of metal containing polyesters as hydrolysable polymers and EP-A-1614722 describes hydrolysable silyl ester ether type binders. WO2009/100908 describes the use of polyoxalates as hydrolysable polymers and these may also be used in this invention. Any known hydrolysable binder can be employed in the present invention.

Preferably, the hydrolysable copolymer is a silyl ester copolymer. In particular it is one comprising the residue of at least one monomer (A) represented by the formula (I) 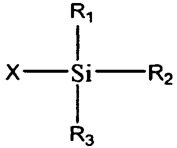 wherein R1 to R3 may be the same or different and each represents an alkyl group or an aryl group, and X represents an acryloyloxy group, a methacryloyloxy group, a (methacryloyloxy)alkylcarboxy group, a maleinoyloxy group, a fumaroyloxy group, an itaconoyloxy group, or a citraconoyloxy group.

As apparent from formula (1), monomers (A) each has a molecular structure comprising an acryloyloxy group, a methacryloyloxy group, a (methacryloyloxy)alkylcarboxy group [a (methacryloyloxy)alkylcarboxy group with an alkyl spacer having 1 to 6 carbon atoms], a maleinoyloxy group [mostly a maleinoyloxy group monoesterified with an alkyl (having 1 to 6 carbon atoms)], a fumaroyloxy group [mostly a fumaroyloxy group monoesterified with an alkyl (having 1 to 6 carbon atoms)], an itaconoyloxy group [mostly an itaconoyloxy group monoesterified with an alkyl (having 1 to 6 carbon atoms)], or a citraconoyloxy group [mostly a citraconoyloxy group monoesterified with an alkyl (having 1 to 6 carbon atoms)] as an unsaturated group (X) and a triorganosilyl group.

In the triorganosilyl group, the three alkyl or aryl groups (R<1> to R<3>) may be the same or different. Examples thereof include linear or branched alkyl groups having up to 20 carbon atoms, such as methyl, ethyl, propyl, and butyl; cycloalkyl groups such as cyclohexyl and substituted cyclohexyls; and aryl groups and substituted aryl groups. Examples of the substituted aryl groups include aryl groups substituted with at least one substituent selected from halogens, alkyl groups having 1 to about 8 carbon atoms, acyl groups, a nitro group, and an amino group

Of such monomers A those having a (meth)acryloyloxy group in the molecule include trimethylsilyl (meth)acrylate, triethylsilyl (meth)acrylate, tri-*n-*propylsilyl (meth)acrylate, triisopropylsilyl (meth)acrylate, tri-*n*-butylsilyl (meth)acrylate, triisobutylsilyl (meth)acrylate, tri-*sec*-butylsilyl (meth)acrylate, tri-*tert*-butylsilyl (meth)acrylate, tri-*n*-arnylsilyl (meth)acrylate, triisoamylsilyl (meth)acrylate, tri-*n*-hexylsilyl (meth)acrylate, tri-*n*-octylsilyl (meth)acrylate, tri-*n-*dodecylsilyl (meth)acrylate, triphenylsilyl (meth)acrylate, tri-(p-methylphenyl)silyl (meth)acrylate, and tribenzylsilyl (meth)acrylate, ethyldimethylsilyl (meth)acrylate, *n*-propyldimethylsilyl (meth)acrylate, isopropyldimethylsilyl (meth)acrylate, *n-*butyldimethylsilyl (meth)acrylate, isobutyldimethylsilyl (meth)acrylate, *tert-*butyldimethylsilyl (meth)acrylate, *n*-pentyldimethylsilyl (meth)acrylate, *n-*hexyldimethylsilyl (meth)acrylate, neohexyldimethylsilyl (meth)acrylate, *n-*octyldimethylsilyl (meth)acrylate, *n*-decyldimethylsilyl (meth)acrylate, dodecyldimethylsilyl (meth)acrylate, *n*-octadecyldimethylsilyl (meth)acrylate, cyclohexyldimethylsilyl (meth)acrylate, phenyldimethylsilyl (meth)acrylate, benzyldimethylsilyl (meth)acrylate, phenethyldimethylsilyl (meth)acrylate, (3-phenylpropyl)dimethylsilyl (meth)acrylate, *p*-tolyldimethylsilyl (meth)acrylate, isopropyldiethylsilyl (meth)acrylate, *n*-butyldiisopropylsilyl (meth)acrylate, *n-*octyldiisopropylsilyl (meth)acrylate, di-*n*-butylmethylsilyl (meth)acrylate, dicyclohexylmethylsilyl (meth)acrylate, methyldiphenylsilyl (meth)acrylate, *tert-*butyldiphenylsilyl (meth)acrylate, di-*n*-butyl-*n*-octylsilyl (meth)acrylate, diisopropylstearylsilyl (meth)acrylate, dicyclohexylphenylsilyl (meth)acrylate, *tert-*butyldiphenylsilyl (meth)acrylate, lauryldiphenylsilyl (meth)acrylate, and *tert*-butyl-m-nitrophenylmethylsilyl (meth)acrylate.

Examples of monomer A having (methacryloyloxy)alkylcarboxy group in the molecule include triethylsiloxycarbonylmethyl (meth)acrylate, tri-*n-*propylsiloxycarbonylmethyl (meth)acrylate, triisopropylsiloxycarbonylmethyl (meth)acrylate, tri-*n*-butylsiloxycarbonylmethyl (meth)acrylate, triisobutylsiloxycarbonylmethyl (meth)acrylate, tri-*tert*-butylsiloxycarbonylmethyl (meth)acrylate, tri-*sec*-butylsiloxycarbonylmethyl (meth)acrylate, tri-*n-*pentylsiloxycarbonylmethyl (meth)acrylate, triisopentylsiloxycarbonylmethyl (meth)acrylate, tri-*n*-hexylsiloxycarbonylmethyl (meth)acrylate, tri-*n-*octylsiloxycarbonylmethyl (meth)acrylate, tri-*n*-dodecylsiloxycarbonylmethyl (meth)acrylate, triphenylsiloxycarbonylmethyl (meth)acrylate, tri-(*p-*methylphenyl)siloxycarbonylmethyl (meth)acrylate, tribenzylsiloxycarbonylmethyl (meth)acrylate, ethyldimethylsiloxycarbonylmethyl (meth)acrylate, *n-*propyldimethylsiloxycarbonylmethyl (meth)acrylate, isopropyldimethylsiloxycarbonylmethyl (meth)acrylate, *n-*butyldimethylsiloxycarbonylmethyl (meth)acrylate, isobutyldimethylsiloxycarbonylmethyl (meth)acrylate, *tert-*butyldimethylsiloxycarbonylmethyl (meth)acrylate, *n-*pentyldimethylsiloxycarbonylmethyl (meth)acrylate, *n-*hexyldimethylsiloxycarbonylmethyl (meth)acrylate, neohexyldimethylsiloxycarbonylmethyl (meth)acrylate, *n-*octyldimethylsiloxycarbonylmethyl (meth)acrylate, *n-*decyldimethylsiloxycarbonylmethyl (meth)acrylate, dodecyldimethylsiloxycarbonylmethyl (meth)acrylate, *n-*octadecyldimethylsiloxycarbonylmethyl (meth)acrylate, cyclohexyldimethylsiloxycarbonylmethyl (meth)acrylate, phenyldimethylsiloxycarbonylmethyl (meth)acrylate, benzyldimethylsiloxycarbonylmethyl (meth)acrylate, phenethyldimethylsiloxycarbonylmethyl (meth)acrylate, (3-phenylpropyl)dimethylsiloxycarbonylmethyl (meth)acrylate, *p-*tolyldimethylsiloxycarbonylmethyl (meth)acrylate, isopropyldiethylsiloxycarbonylmethyl (meth)acrylate, *n-*butyldiisopropylsiloxycarbonylmethyl (meth)acrylate, *n-*octyldiisopropylsiloxycarbonylmethyl (meth)acrylate, methyldi-*n-*butylsiloxycarbonylmethyl (meth)acrylate, methyldicyclohexylsiloxycarbonylmethyl (meth)acrylate, methyldiphenylsiloxycarbonylmethyl (meth)acrylate, *tert-*butyldiphenylsiloxycarbonylmethyl (meth)acrylate; and others as described in WO03/080747,

Examples of the monomers A having a maleinoyloxy group in the molecule include trimethylsilyl methyl maleate, triethylsilyl ethyl maleate, tri-*n*-propylsilyl *n-*propyl maleate, triisopropylsilyl methyl maleate, triisopropylsilyl isoamyl maleate, tri-*n*-butylsilyl *n*-butyl maleate, di-*n*-butyl-*n*-octylsilyl methyl maleate, triisobutylsilyl phenyl maleate, *tert*-butyldimethylsilyl methyl maleate, *tert-*butyldiphenylsilyl methyl maleate, tri-*n*-amylsilyl *n*-amyl maleate, tri-*n*-hexylsilyl *n-*hexyl maleate, tri-*n*-hexylsilyl octyl maleate, tri-*n*-dodecylsilyl methyl maleate, tri-*n*-octylsilyl dodecyl maleate, triphenylsilyl methyl maleate and tri-p-tolylsilyl ethyl maleate.

Examples of the monomers A having a fumaroyloxy group in the molecule include trimethylsilyl methyl fumarate, triethylsilyl ethyl fumarate, ethyldimethylsilyl methyl fumarate, tri-*n*-propylsilyl-*n*-propyl fumarate, triisopropylsilyl methyl fumarate, tri-*n*-butylsilyl-*n*-butyl fumarate, *n-*butyldimethylsilyl methyl fumarate, triisobutylsilyl methyl fumarate, tri-*tert-*butylsilyl methyl fumarate, tri-*n*-amylsilyl-n-ainyl fumarate, tri-*n*-hexylsilyl-*n*-hexyl fumarate, tri-*n*-octylsilyl dodecyl fumarate, tri-*n*-dodecylsilyl methyl fumarate, *n*-, octyldi-*n*-butylsilyl methyl fumarate, triphenylsilyl methyl fumarate, tri-p-methylphenylsilyl methyl fumarate and tri-2-chloroisopropylsilyl methyl fumarate.

Examples of the monomers A having an itaconoyloxy group in the molecule include trimethylsilyl methyl itaconate, triethylsilyl ethyl itaconate, ethyldimethylsilyl methyl itaconate, tri-*n*-propylsilyl-*n*-propyl itaconate, triisopropylsilyl methyl itaconate, tri-*n*-butylsilyl-*n*-butyl itaconate, *n-*butyldimethylsilyl methyl itaconate, di-*n*-butyl-*n*-octylsilyl methyl itaconate, triisobutylsilyl methyl itaconate, tri-*tert*-butylsilyl methyl itaconate, tri-*n*-amylsilyl-*n*-amyl itaconate, tri-*n*-hexylsilylzn-hexyl itaconate, tri-*n*-octylsilyl dodecyl itaconate, tri-*n*-dodecylsilyl methyl itaconate, triphenylsilyl methyl itaconate, tri-p-fluorophenylsilyl methyl itaconate and tri-2-cyanoisopropylsilyl methyl itaconate.

Examples of the monomers A having a citraconoyloxy group in the molecule include trimethylsilyl methyl citraconate, triethylsilyl ethyl citraconate, tri-*n-*propylsilyl-*n*-propyl citraconate, tri-*n*-butylsilyl-n-butyl citraconate, tri-*n*-amylsilyl-*n*-amyl citraconate, tri-*n*-hexylsilyl-n-hexyl citraconate, tri-*n*-octylsilyl dodecyl citraconate, tri-*n*-dodecylsilyl methyl citraconate, triphenylsilyl methyl citraconate, tri=p-hydroxyphenylsilyl methyl citraconate, triisopropylsilyl methyl citraconate, triisobutylsilyl methyl citraconate, tri-2-bromoisopropylsilyl methyl citraconate, tri-*tert*-butylsilyl methyl citraconate, ethyldimethylsilyl methyl citraconate, *n-*butyldimethylsilyl methyl citraconate, and *n*-octyldi-*n*-butylsilyl methyl citraconate.

The polymerizable monomers other than monomers A are monomers copolymerizable with monomers A. Examples thereof include (meth)acrylic acid and (meth)acrylic esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, amyl (meth)acrylate, hexyl (meth)acrylate, 2-ethylhexyl (meth)acrylate, n-octyl (meth)acrylate, isooctyl (meth)acrylate, 3,5,5-trimethylhexyl (meth)acrylate, decyl (meth)acrylate, isodecyl (meth)acrylate, dodecyl (meth)acrylate, isotridecyl (meth)acrylate, octadecyl (meth)acrylate, cyclohexyl (meth)acrylate, 4-tert-butylcyclohexyl (meth)acrylate, methyl (meth)acrylate, dicyclopentenyl (meth)acrylate, dicyclopentenyl oxyethyl (meth)acrylate, isobornyl (meth)acrylate, phenyl (meth)acrylate, benzyl (meth)acrylate, naphthyl (meth)acrylate, 2-hydroxyethyl (meth)acrylate, hydroxypropyl (meth)acrylate, hydroxybutyl (meth)acrylate, poly(ethylene glycol) (meth)acrylate, poly(propylene glycol) (meth)acrylate, 2-methoxyethyl (meth)acrylate, 2-ethoxyethyl (meth)acrylate, 2-butoxyethyl (meth)acrylate, 2-phenoxyethyl (meth)acrylate, ethyl diglycol (meth)acrylate, ethyl triglycol (meth)acrylate, butyl diglycol (meth)acrylate, poly(ethylene glycol) methyl ether (meth)acrylate, poly(propylene glycol) methyl ether (meth)acrylate, tetrahydrofurfuryl (meth)acrylate, glycidyl (meth)acrylate, 2-(dimethylamino)ethyl (meth)acrylate, 2-(diethylamino)ethyl (meth)acrylate, 3-(dimethylamino)propyl (meth)acrylate, 3-(diethylamino)propyl (meth)acrylate, 2-(*tert*-butylamino)ethyl (meth)acrylate and lactone modified hydroxyalkyl (meth)acrylates such as caprolactone acrylate and others as described in WO 2009/149919;

Other examples of the polymerizable monomers include esters of crotonic acid, maleic acid, fumaric acid, itaconic acid and citraconic acid such as methyl crotonate, ethyl crotonate, isobutyl crotonate, hexyl crotonate, dimethyl maleate, diethyl maleate, dibutyl maleate, maleic anhydride, dimethyl fumarate, diethyl fumarate, diisobutyl fumarate, dimethyl itaconate, dibutyl itaconate, itaconic anhydride, citraconic anhydride;
vinyl esters such as vinyl acetate, vinyl propionate, vinyl butyrate, vinyl pivalate, vinyl dodecanoate, vinyl benzoate, vinyl 4-*tert*-butylbenzoate, VeoVa^{™} 9, VeoVa^{™} 10;
(meth)acrylamide, *N*-propyl (meth)acrylamide, *N*-isopropyl (meth)acrylamide, *N*-*tert*-butyl (meth)acrylamide, *N*-phenyl (meth)acrylamide, *N-*methylol (meth)acrylamide, *N*-(isobutoxymethyl) (meth)acrylamide, *N*-[3-(dimethylamino)propyl] (meth)acrylamide, diacetone (meth)acrylamide, *N,N-*dimethyl (meth)acrylamide;
metal salts of acrylic acid and methacrylic acid and other metal functional monomers, e.g. as described in EP 1 323 745, (meth)acrylonitrile, (2-acetoacetoxy)ethyl (meth)acrylate and other monomers as described in WO 96/41842 and US 4 593 055;
maleimide and N-substituted maleimides such as maleimide, N-phenyl maleimide and others as described in WO 96/41841;
N-vinyl lactams, N-vinyl amides such as N-vinyl pyrrolidone, and other lactam and amide functional monomers as described in EP 1 127 902;
other vinyl monomers such as styrene, α-methyl styrene, vinyl toluene and p-chlorostyrene.

In producing the polymer containing organosilyl ester groups, the proportion of at least one of monomers A represented by formula (1) to at least one polymerizable monomer other than monomers A can be suitably determined according to the use of the coating composition. In general, however, the proportion of at least one of monomers A is preferably from 1 to 100% by weight and that of at least one other monomer is preferably from 99 to 0% by weight.

The polymer containing organosilyl ester groups can be obtained by polymerizing such a monomer mixture in the presence of a polymerization catalyst by any of various methods such as solution polymerization, bulk polymerization, emulsion polymerization, and suspension polymerization in an ordinary way. In preparing a coating composition using this polymer containing organosilyl ester groups, the polymer is preferably diluted with an organic solvent to give a polymer solution having an appropriate viscosity. From this standpoint, it is desirable to employ solution polymerization or bulk polymerization.

Examples of the polymerization initiator include azo compounds such as azo compounds such as 2,2'-azobis(2-methylbutyronitrile), 2,2'-azobis(isobutyronitrile) and 1,1'-azobis(cyanocyclohexane) and peroxides such as *tert*-butyl peroxypivalate, *tert*-butyl peroxy-2-ethylhexanoate, *tert*-butyl peroxydiethylacetate, *tert*-butyl peroxyisobutyrate, di-*tert*-butyl peroxide, *tert-*butyl peroxybenozate, and *tert-butyl* peroxyisopropylcarbonate, *tert*-amyl peroxypivalate, *tert*-amyl peroxy-2-ethylhexanoate, 1,1-di(*tert*-amyl peroxy)cyclohexane and dibenzoyl peroxide. These compounds are used alone or as a mixture of two or more thereof.

Examples of the organic solvent include aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, tert-butyl acetate, amyl acetate, ethylene glycol methyl ether acetate; ethers such as ethylene glycol dimethyl ether, diethylene glycol dimethyl ether, dibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents. These compounds are used alone or as a mixture of two or more thereof.

The thus-obtained polymer containing organosilyl ester groups desirably has a weight-average molecular weight of from 1,000 to 100,000. The solution of the polymer desirably has a viscosity of 5000 mPa s (50 P) or lower, preferably 2000 mPa s (20 P) or lower at 25°C. For attaining such a viscosity, the polymer solution is desirably regulated so as to have a solid content of from 5 to 90% by weight, preferably from 15 to 85% by weight.

Alternatively, the hydrolysable resin may be a polyoxalate. Polyoxalates will preferably be formed from the polymerisation of at least one oxalate monomer and at least one diol monomer.

The polyoxalates can be prepared by condensation polymerisation using any of various methods known and used in the art. Examples of common polycondensation reactions include direct esterification reaction between oxalic acid and diols; transesterification reaction between dialkyl oxalates and diols; reaction in solution between oxalyl chloride with diols; and interfacial condensation reaction between oxalyl chloride and diols or alkali salts of diols or between alkali salts of oxalic acid, such as sodium oxalate or potassium oxalate, and diols. The polycondensation reactions can be carried out as melt or in solution. The polymerisation can be performed under melt polycondensation condition or in solution. Optionally the polycondensation is carried out in the presence of a catalyst.

The starting materials for the preparation of polyoxalates depend on the polymerisation process as indicated in the above mentioned polymerisation processes. The polyoxalates are however formed from oxalic acid or a derivative thereof, i.e. an oxalate monomer. By derivative thereof is meant a mono or diester thereof, a mono or diacid halide (e.g. chloride) thereof, or salt thereof, e.g. alkali metal salt thereof. Ideally any derivative is one of the oxalic compounds mentioned below.

The oxalate monomer used in the polymerisation reaction may be an ester of oxalic acid, especially a diester. Esters may be alkyl esters, alkenyl esters or aryl esters. Examples of suitable dialkyl oxalates for the preparation of polyoxalates include dimethyl oxalate, diethyl oxalate, dipropyl oxalate and dibutyl oxalate.

Other preferred oxalate monomers are oxalic acid, oxalyl chloride, and salts of oxalic acid, e.g. alkali metal salts thereof, such as sodium oxalate or potassium oxalate.

Examples of diols for the preparation of polyoxalates include saturated aliphatic and saturated cycloaliphatic diols, unsaturated aliphatic diols or aromatic diols. Linear or branched saturated aliphatic diols are preferred.

Preferred diols include C₃₋₂₀ aliphatic or C₄₋₂₀-cycloaliphatic diols such as 1,3-propanediol, 1,2-butanediol, 1,3-butanediol, 1,4-butanediol, 2,3-butanediol, 1,2-pentanediol, 1,4-pentanediol, 1,5-pentanediol, 2,4-pentanediol, 1,2-hexanediol, 1,5-hexanediol, 1,6-hexanediol, 2,5-hexanediol, 1,7-heptanediol, 1,2-octanediol, 1,8-octanediol, 1,9-nonanediol, 1,10-decanediol, 1,2-dodecanediol, 1,12-dodecanediol, 1,14-tetradecanediol, 1,2-hexadecanediol, 1,16-hexadecanediol, 2,2-dimethyl-1,3-propanediol (neopentyl glycol), 3-methyl-1,3-butanediol, 3-methyl-1,5-pentanediol, 2-methyl-2,4-pentanediol, 2,3-dimethyl-2,3-butanediol, 2,2-diethyl-1,3-propanediol, 2,4-dimethyl-2,4-pentanediol, 2-methyl-2-propyl-1,3-propanediol, 2,2,4-trimethyl-1,3-pentanediol, 2,5-dimethyl-2,5-hexanediol, 2-ethyl-1,3-hexandiol, 2-butyl-2-ethyl-1,3-propanediol, 2,2-dibutyl-1,3-propanediol, 1,2-cyclohexanediol, 1,3-cyclohexanediol, 1,4-cyclohexandiol, 1,2-cyclohexanedimethanol, 1,4-cyclohexanedimethanol, cyclododecanediol, dipropylene glycol, triethylene glycol, pentaethylene glycol, hexaethylene glycol and hydroxypivalyl hydroxypivalate and mixtures thereof. Preferred diols are C₃₋₁₀ aliphatic or C₅₋₁₀-cycloaliphatic diols. Complete details of the use of these materials can be found in WO2009/100908.

The amount of hydrolysable polymer component present may be up to 99% of the binder component. Preferably, the sum of hydrocarbon resin components and hydrolysable binder adds up to 100% although a plasticiser may also be present in the binder component.

The antifouling coating composition of the invention should preferably have solids content above 40 vol%, e.g. above 45 % by volume, such as above 50 vol%, preferably above 55 vol%.

More preferably the antifouling coating composition should have a content of volatile organic compounds (VOC) below 500 g/L, preferably below 400 g/L, e.g. below 390 g/L. The VOC content can be measured on an antifouling coating having a curing agent added thereto or without such a curing agent. Where a curing agent is used, it is preferred if the VOC content of the mixture incorporating the curing agent is less than 400 g/L, more preferably less than 375 g/L, especially less than 350 g/L. VOC content can be calculated (ASTM D5201-01) or measured, preferably measured.

The antifouling coating composition of the invention will need to contain at least one compound capable of preventing fouling on an object, e.g. a biologically active agent especially a biocide.

The antifouling coating composition of the present invention preferably comprises one or more biologically active agents. By biologically active agent/compound is meant any chemical compound that prevents the settlement of marine organisms on a surface, and/or prevents the growth of marine organisms on a surface and/or encourages the dislodgement of marine organisms from a surface. Examples of inorganic biologically active compounds include copper and copper compounds such as copper oxides, e.g. cuprous oxide and cupric oxide; copper alloys, e.g. copper-nickel alloys; copper salts, e.g. copper thiocyanate, copper sulphide; and barium metaborate.

Examples of organometallic biologically active compounds include zinc pyrithione; organocopper compounds such as copper pyrithione, copper acetate, copper naphthenate, oxine copper, copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate), zinc ethylenebis(dithiocarbamate), manganese ethylenebis(dithiocarbamate) and manganese ethylene bis(dithiocarbamate) complexed with zinc salt.

Examples of organic biologically active compounds include heterocyclic compounds such as 2-(*tert*-butylamino)-4-(cyclopropylamino)-6-(methylthio)-1,3,5-triazine, 4,5-dichloro-2-*n*-octyl-4-isothiazolin-3-one, 1,2-benzisothiazolin-3-one, 2-(thiocyanatomethylthio)-1,3-benzothiazole and 2,3,5,6-tetrachloro-4-(methylsulphonyl)pyridine; urea derivatives such as 3-(3,4-dichlorophenyl)-1,1-dimethylurea; amides and imides of carboxylic acids, sulphonic acids and sulphenic acids such as *N*-(dichlorofluoromethylthio)phthalimide, *N*-dichlorofluoromethylthio-*N',N'*-dimethyl-*N*-phenylsulfamide, *N*-dichlorofluoromethylthio-*N*',*N*'-dimethyl-*N-p*-tolylsulfamide and *N*-(2,4,6-trichlorophenyl)maleimide; other organic compounds such as pyridine triphenylborane, amine triphenylborane, 3-iodo-2-propynyl *N-*butylcarbamate, 2,4,5,6-tetrachloroisophthalonitrile and *p-*((diiodomethyl)sulphonyl)toluene.

Other examples of biologically active agents may be tetraalkylphosphonium halogenides, guanidine derivatives, imidazole containing compounds such as medetomidine and derivatives and enzymes such as oxidase, proteolytically, hemicellulolytically, cellulolytically, lipolytically and amylolytically active enzymes.

Optionally the biologically active compounds may be encapsulated or adsorbed on an inert carrier or bonded to other materials for controlled release.

The biologically active compounds may be used alone or in mixtures. The use of these biologically active agents is known in antifouling coatings and their use would be familiar to the skilled man.

The total amount of biologically active agent in the antifouling compositions of the invention may be in the range 0.5 to 80 wt%, such as 1 to 70 wt%. It will be appreciated that the amount of this component will vary depending on the end use and the biologically active compound used.

In addition to the biologically active compounds the antifouling coating composition according to the present invention optionally comprise one or more components selected among other binders, pigments, extenders and fillers, dehydrating agents and drying agents, additives, solvents and thinners.

An additional binder can be used to adjust the self-polishing properties and the mechanical properties of the antifouling coating film. Examples of binders that can be used in addition to the hydrocarbon resin of the invention include rosin materials such as wood rosin, tall oil rosin and gum rosin;
rosin derivatives such as hydrogenated and partially hydrogenated rosin, disproportionated rosin, dimerised rosin, polymerised rosin, maleic acid esters, fumaric acid esters and other esters of rosin and hydrogenated rosin, copper resinate, zinc resinate, calcium resinate, magnesium resinate and other metal resinates of rosin and polymerised rosin and others as described in WO 97/44401;
resin acids and derivatives thereof such as copal resin and sandarach resin; other carboxylic acid containing compounds such as abietic acid, neoabietic acid, dehydroabietic acid, dihydroabietic acid, tetrahydroabietic acid, secodehydroabietic acid, pimaric acid, paramatrinic acid, isoprimaric acid, levoprimaric acid, agathenedicarboxylic acid, sandaracopimalic acid, lauric acid, stearic acid, isostearic acid, oleic acid, linoleic acid, linolenic acid, isononanoic acid, versatic acid, naphthenic acid, tall oil fatty acid, coconut oil fatty acid, soyabean oil fatty acid and derivatives thereof;
silyl ester copolymers, for example as described in US 4,593,055, EP 0 646 630 and WO 2009/007276;
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(N-vinyl pyrrolidone) copolymers and other copolymers as described in EP 0 526 441;
(meth)acrylic polymers and copolymers, such as poly(n-butyl acrylate), poly(n-butyl acrylate-co-isobutyl vinyl ether);
vinyl ether polymers and copolymers, such as poly(methyl vinyl ether), poly(ethyl vinyl ether), poly(isobutyl vinyl ether), poly(vinyl chloride-co-isobutyl vinyl ether);
aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units;
metal containing polyesters for example as described in EP 1 033 392 and EP 1 072 625;
alkyd resins and modified alkyd resins; and
other condensation polymers as described in WO 96/14362.

Dehydrating agents and drying agents contribute to the storage stability of the antifouling coating composition by removing moisture introduced from raw materials, such as pigments and solvents, or water formed by reaction between carboxylic acid compounds and bivalent and trivalent metal compounds in the antifouling coating composition. The dehydrating agents and drying agents that may be used in the antifouling coating composition according to the present invention include organic and inorganic compounds. Examples of dehydrating agents and drying agents include calcium sulphate hemihydrate, anhydrous calcium sulphate, anhydrous magnesium sulphate, anhydrous sodium sulphate, anhydrous zinc sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-*tert*-butyl borate; silicates such as trimethoxymethyl silane, tetraethyl silicate and ethyl polysilicate; and isocyanates, such as p-toluenesulfonyl isocyanate.

The preferred dehydrating agents and drying agents are the inorganic compounds.

Examples of pigments are inorganic pigments such as titanium dioxide, iron oxides, zinc oxide, zinc phosphate, graphite and carbon black; organic pigments such as phthalocyanine compounds and azo pigments.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

In general, any of these optional components can be present in an amount ranging from 0.1 to 50 wt%, typically 0.5 to 20 wt%, preferably 0.75 to 15 wt% of the antifouling composition. It will be appreciated that the amount of these optional components will vary depending on the end use

It is highly preferred if the antifouling composition contains a solvent. This solvent is preferably volatile and is preferably organic. Examples of organic solvents and thinners are aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, *tert*-butyl acetate, amyl acetate, isoamyl acetate, ethylene glycol methyl ether acetate; ethers such as ethylene glycol dimethyl ether, diethylene glycol dimethyl ether, dibutyl ether, dioxane, tetrahydrofuran, alcohols such as *n*-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

Preferred solvents are aromatic solvents, especially xylene and mixtures of aromatic hydrocarbons.

The amount of solvent is preferably as low as possible. The solvent content may be up to 50 wt% of the composition, preferably up to 45 wt% of the composition, such as up to 40 wt% but may be as low as 15 wt% or less, e.g. 10 wt% or less. Again, the skilled man will appreciate that the solvent content will vary depending on the other components present and the end use of the coating composition.

Alternatively the coating can be dispersed in an organic non-solvent for the film-forming components in the coating composition or in an aqueous dispersion.

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying the coating onto the object. Typically the surface will need to be separated from the seawater to allow coating. The application of the coating can be achieved as conventionally known in the art.

The invention will now be described with reference to the following non limiting examples and figures. Figure 1 shows the polishing behaviour of comparative examples containing copolymer P-1 and rosin. Figure 2 shows the polishing behaviour of examples containing copolymer P-1 and hydrocarbon resin. Figure 3 shows the polishing behaviour of examples containing copolymer P-1 and blends of hydrocarbon resins. Figure 4 shows the polishing behaviour of comparative examples containing copolymer P-2 and rosin. Figure 5 shows the polishing behaviour of examples containing copolymer P-2 and hydrocarbon resin

### Examples

The following abbreviations are used:
- AA: Acrylic acid
- AIBN: 2,2'-azodi(isobutyronitrile)
- AMBN: 2,2'-azodi(2-methylbutyronitrile)
- B3MP: butyl3-mercaptopropionate
- BEPD: 2-Butyl-2-ethyl-1,3-propanediol
- CHDM: 1,4-Cyclohexanedimethanol
- CLA-2: Caprolactone modified hydroxyethyl acrylate, average Mw 344
- DEO: Diethyl oxalate
- DMIPA: Dimethyl isophthalate
- EA: Ethyl acrylate
- EGDMA: Ethylene glycol dimethacrylate
- 2-EHA: 2-Ethylhexyl acrylate
- MAA: Methacrylic acid
- MEA: 2-Methoxyethyl acrylate
- MMA: Methyl methacrylate
- MSD: α-Methylstyrene dimer
- PGM: Propylene glycol monomethyl ether
- TBSMA: Tri(n-butyl)silyl methacrylate
- THFA: Tetrahydrofurfuryl acrylate
- TiPSA: Triisopropylsilyl acrylate

### Analytical Procedures

### Determination of solids content of the polymer solutions

The solids content in the polymer solutions are determined in accordance with ISO 3251. A test sample of 0.6 g ± 0.1 g are taken out and dried in a ventilated oven at 150°C for 30 minutes. The weight of the residual material is considered to be the non-volatile matter (NVM). The non-volatile matter content is expressed in weight percent. The value given is the average of three parallels.

### Determination of polymer average molecular weights distribution

The polymers are characterised by Gel Permeation Chromatography (GPC) measurement. The molecular weight distribution (MWD) was determined using a Polymer Laboratories PL-GPC 50 instrument with two PLgel 5 µm Mixed-D columns from Polymer Laboratories in series, tetrahydrofuran (THF) as eluent at ambient temperature and at a constant flow rate of 1 mL/min and with a refractive index (RI) detector. The columns were calibrated using polystyrene standards Easivials PS-H from Polymer Laboratories. The data were processed using Cirrus software from Polymer Labs.

Samples were prepared by dissolving an amount of polymer solution corresponding to 25 mg dry polymer in 5 mL THF. The samples were kept for minimum 3 hours at room temperature prior to sampling for the GPC measurements.

The weight-average molecular weight (Mw), the number-average molecular weight (Mn) and the polydispersity index (PDI), given as Mw/Mn, are reported in the tables.

### Determination of the glass transition temperature

The glass transition temperature (Tg) is obtained by Differential Scanning Calorimetry (DSC) measurements. The DSC measurements were performed on a TA Instruments DSC Q200. Samples were prepared by transfering a small amount of polymer solution to an aluminium pan and dry the samples for minimum 10 h at 50°C and 1 h at 150°C The samples of approx. 10 mg dry polymer material were meassured in open aluminum pans and scans were recorded at a heating and cooling rate of 10°C/min with an empty pan as reference. The onset value of the glass transition of the second heating is reported as the Tg of the polymers.

### Calculation of the volatile organic compound (VOC) content of the antifouling coating composition

The volatile organic compound (VOC) content of the antifouling coating composition is calculated in accordance with ASTM D5201.

### Determination of polishing rates of antifouling coating films in sea water

The polishing rate is determined by measuring the reduction in film thickness of a coating film over time. For this test PVC discs are used. The coating compositions are applied as radial stripes on the disc using a film applicator. The thickness of the dry coating films are measured by means of a suitable electronic film thickness gauge. The PVC discs are mounted on a shaft and rotated in a container in which seawater is flowing through. Natural seawater which has been filtered and temperature-adjusted to 25°C ± 2°C is used. The PVC discs are taken out at regular intervals for measuring the film thickness. The discs are rinsed and allowed to dry overnight at room temperature before measuring the film thickness.

### Copolymer solutions

### General procedure for preparation of silyl ester copolymer solution

A quantity of solvent is charged to a temperature-controlled reaction vessel equipped with a stirrer, a condenser, a nitrogen inlet and a feed inlet. The reaction vessel is heated and maintained at the reaction temperature of 85°C. A pre-mix of monomers, optional chain transfer agent, initiator and solvent is prepared. The pre-mix is charged to the reaction vessel at a constant rate over 2 hours under a nitrogen atmosphere. After a further 1 hour, post-addition of a boost initiator solution is added. The reaction vessel is maintained at the reaction temperature of 85°C for a further 2 hours. The temperature is then increased to 120°C, maintained at that temperature for a further 30 minutes and then cooled to room temperature.

The composition of the copolymer solutions are given in Table 1.

**Table 1: Ingredients in parts by weight and properties of the silyl ester copolymers.**

| | **Ingredients** | | **Examples** | | |
|---|---|---|---|---|---|
| | | | **P-1** | **P-2** | **P-3** |
| Reactor charge | Solvent | Xylene | 34.36 | 34.38 | 30.81 |
| Pre-mix charge | Monomers | TBSMA | 23.19 | - | - |
| | | TiPSA | - | 25.32 | 32.35 |
| | | MMA | 21.71 | 19.02 | 19.50 |
| | | 2-EHA | 5.11 | - | - |
| | | CLA-2 ⁽¹⁾ | - | 5.45 | - |
| | | THFA | - | - | 2.77 |
| | | MEA | - | - | - |
| | | EGDMA | - | - | 0.21 |
| | Chain transfer agent | B3MP | - | 0.20 | 0.17 |
| | Initiator | AMBN | 0.51 | 0.50 | 0.56 |
| | Solvent | Xylene | 10.00 | 10.00 | 9.00 |
| Boost charge | Initiator | AMBN | 0.13 | 0.12 | 0.14 |
| | Solvent | Xylene | 5.00 | 5.00 | 4.50 |
| Properties | Actual NVM (wt%) | | 50.2 | 50.6 | 56.3 |
| | Viscocity (cP=mPa s) | | 415 | 225 | 363 |
| | Mw (kD) | | 39.7 | 33.6 | 22.8 |
| | PDI | | 2.3 | 4.4 | 3.2 |
| | Tg(°C) | | 29 | 30 | - |

| | | | | | |
|---|---|---|---|---|---|
| (1) Available as SR495 from Sartomer. | | | | | |

### Procedure for preparation of polyoxalate by transesterification in melt

The starting materials comprising a mixture of 0.60 mole eq. of diethyl oxalate (DEO) and 0.35 mole eq. of dimethyl isophthalate (DMIPA), 0.65 mole eq. of 2-butyl-2-ethyl-1,3-propanediol (BEPD), 0.35 mole eq. 1,4-cyclohexanedimethanol (CHDM) and 0.02 mole eq. of dibutyltin oxide were charged into a 5L temperature controlled reaction vessel equipped with a stirrer, thermometer, condenser and nitrogen inlet. The mixture was heated slowly under nitrogen to 190°C while the condensates were distilled. The heating rate was controlled so that the temperature in the outlet did not exceed the boiling point of the condensates. The temperature was maintained at 190°C until 80-90% of the theoretical amount of condensate was collected. The nitrogen inlet is closed and vacuum is applied. The vacuum is adjusted gradually down to 100 mbar. The temperature is maintained at 190°C for 3 hours. The polymer melt was cooled to approx. 100°C under vacuum. The vacuum was removed and solvent wais added. The polymer solution was cooled to room temperature.

**Table 2: Ingredients in parts by weight and properties of the polyoxalate copolymer.**

| | **Ingredients** | | **P-4** |
|---|---|---|---|
| Reactor charge | Monomers | DEO | 1272 |
| | | DMIPA | 986 |
| | | BEPD | 1511 |
| | | CHDM | 732 |
| | Catalyst | Dibutyltin oxide | 1.44 |
| Thinning | Solvent | Xylene | 843 |
| Properties | Actual NVM (wt%) | | 78.3 |
| | Viscocity (cP= mPa s) | | 14,900 |
| | Mw (kD) | | 4.4 |
| | PDI | | 1.9 |
| | Tg (°C) | | 5.1 |

### Procedure for preparation of metal containing monomer

The monomer is prepared according to the procedure described in Production Example 1 in WO2009/123263

In a four-necked flask equipped with a condenser, a thermometer, a dropping funnel and a stirrer, 85.4 parts of propylene glycol methyl ether (PGM) and 40.7 parts of zinc oxide are charged and heated to 75°C under stirring. From the dropping funnel, a mixture of 43.1 parts of methacrylic acid (MAA), 36.1 parts of acrylic acid (AA) and 5 parts of water are dropped at a constant rate over a period of 3 hr. Upon the completion of dropping, the reaction solution turns from milky white to transparent. Further, stirring is carried out for 2 hr, and 36 parts of propylene glycol methyl ether was added, thereby obtaining transparent mixture solution (A) containing metal-containing monomer.

### Procedure for preparation of metal containing copolymer solution

The copolymer solution is prepared according to the procedure described in Production Example 3 in WO2009/123263

In a temperature-controlled reaction vessel equipped with a condenser, a thermometer, a dropping funnel and a stirrer, 15 parts of propylene glycol methyl ether, 57 parts of xylene and 4 parts of ethyl acrylate are charged and heated to 100°C under stirring. From the dropping funnel, a transparent mixture consisting of 1 part of methyl methacrylate, 66.2 parts of ethyl acrylate, 5.4 parts of 2-methoxyethyl acrylate, 52 parts of the mixture solution (A), 10 parts of xylene, 1 part of chain transfer agent MSD, 2.5 parts of AIBN and 7 parts of AMBN is dropped at a constant rate over a period of 6 hr. After the completion of dropping, 0.5 part of t-butyl peroxyoctoate and 7 parts of xylene are further dropped over a period of 30 min. Further, stirring is carried out for 1 hr 30 min, and 4.4 parts of xylene is added.

The composition of the copolymer solutions are given in Table 3.

**Table 3: Ingredients in parts by weight and properties of the metal-containing copolymer.**

| | **Ingredients** | | **P-5** |
|---|---|---|---|
| Reactor charge | Monomer | EA | 4.0 |
| | Solvent | PGM | 15.0 |
| | | Xylene | 57.0 |
| Pre-mix charge | Monomers | Monomer solution (A) | 52.0 |
| | | MMA | 1.0 |
| | | EA | 66.2 |
| | | MEA | 5.4 |
| | Chain transfer agent | MSD | 1.0 |
| | Initiator | AIBN | 2.5 |
| | | AMBN | 7.0 |
| | Solvent | Xylene | 10.0 |
| Boost charge | Initiator | t-Butyl, peroxyoctoate | 0.5 |
| | Solvent | Xylene | 7.0 |
| Thinning | Solvent | Xylene | 4.4 |

### Coating compositions

### General procedure for preparation of antifouling coating composition

The ingredients are mixed and ground to a fineness of < 30 µm using a highspeed disperser. Any ingredients sensitive to the high shear forces and temperature in the grinding process is added in the let-down. The general compositions of the coating compositions are presented in Tables 4-6.

The following commercially available hydrocarbon resins where employed:
Novares TN 80 - Special C9 blend hydrocarbon resin; softening point 75-85°C.
Novares TM 20 - Pure monomer aromatic hydrocarbon resin; liquid.
Novares L 100 - Aromatic hydrocarbon resin; liquid.
Novares TT 30 - C9 hydrocarbon resin; softening point 20-35°C.
Novares TK 90 - C5 modified C9 hydrocarbon resin; softening point 85-95°C.
Novares LC 35 - Phenol modified special C9 blend hydrocarbon resin; hydroxy functional; liquid.

**Table 4: Composition of Antifouling coating examples and comparative examples containing P-1. Ingredients in parts by weight.**

| **Ingredients** | | **Examples** | | | | | | | | |
|---|---|---|---|---|---|---|---|---|---|---|
| | | **Coat 1A** | **Coast 1B** | **Coat 1C** | **Coat 1D** | **Coat 1E** | **Ref 1A** | **Ref 1B** | **Ref 1C** | **Ref 1D** |
| Binders | Polymer P-1 (50% in xylene) | 25.2 | 22.4 | 19.6 | 19.6 | 19.6 | 28.0 | 25.2 | 22.4 | 19.6 |
| | Novares TN 80 | 1.5 | 2.9 | 4.4 | 2.9 | 2.9 | - | - | - | - |
| | Novares TM 20 | - | - | - | 1.5 | - | - | - | - | - |
| | Novares L 100 | | - | - | - | 1.5 | - | - | - | - |
| | Rosin solution (60% in xylene) | - | - | - | - | - | - | 2.4 | 4.8 | 7.2 |
| Biocides | Cuprous oxide | 35.9 | 35.9 | 35.9 | 35.9 | 35.9 | 35.9 | 35.9 | 35.9 | 35.9 |
| | Copper pyrithione | 1.5 | 1.5 | 1.5 | 1.5 | 1.5 | 1.5 | 1.5 | 1.5 | 1.5 |
| Pigments and extenders | Iron oxide red | 1.7 | 1.7 | 1.7 | 1.7 | 1.7 | 1.7 | 1.7 | 1.7 | 1.7 |
| | Titanium dioxide | 0.9 | 0.9 | 0.9 | 0.9 | 0.9 | 0.9 | 0.9 | 0.9 | 0.9 |
| | Zinc oxide red seal | 7.4 | 7.4 | 7.4 | 7.4 | 7.4 | 7.4 | 7.4 | 7.4 | 7.4 |
| | Barium sulfate | 5.5 | 5.5 | 5.5 | 5.5 | 5.5 | 5.5 | 5.5 | 5.5 | 5.5 |
| | Talc | 4.2 | 4.2 | 4.2 | 4.2 | 4.2 | 4.2 | 4.2 | 4.2 | 4.2 |
| Dehydrating agent | Calsium sulfate | 1_{:}1 | 1.1 | 1.1 | 1.1 | 1.1 | 1.1 | 1.1 | 1.1 | 1.1 |
| Thixotropic agent | Disparlon A603-20X ⁽²⁾ | 4.5 | 4.5 | 4.5 | 4.5 | 4.5 | 4.5 | 4.5 | 4.5 | 4.5 |
| Solvent | Xylene | 10.6 | 12.0 | 13.3 | 13.3 | 13.3 | 9.2 | 9.6 | 10.0 | 10.4 |
| Properties | Calculated NVM (vol%) | 47.0 | 47.0 | 47.0 | 47.0 | 47.0 | 47.0 | 47.0 | 47.0 | 47.0 |
| | Calculated VOC (g/L) | 477 | 477 | 477 | 477 | 477 | 477 | 477 | 477 | 477 |

| | | | | | | | | | | |
|---|---|---|---|---|---|---|---|---|---|---|
| (2) Disparlon A603-20X, amide wax, 20% in xylene; available from Kusumoto Chemicals, Ltd. | | | | | | | | | | |

**Table 5: Composition of Antifouling coating examples and comparative examples containing P-2. Ingredients in parts by weight.**

| **Ingredients** | | **Examples** | | | | | | | | |
|---|---|---|---|---|---|---|---|---|---|---|
| | | **Coat 2A** | **Coat 2B** | **Coat 2C** | **Coat 2D** | **Coat 2E** | **Ref 2A** | **Ref 2B** | **Ref 2C** | **Ref 2C** |
| Binders | Polymer P-2 (50% in xylene) | 26.5 | 23.6 | 20.6 | 26.5 | 23.6 | 29.5 | 26.5 | 23.6 | 20.6 |
| | Novares TT 30 | 1.9 | 3.7 | 5.6 | - | - | - | - | - | - |
| | Novares TK 90 | - | - | - | 1.5 | - | - | - | - | - |
| | Novares TN 80 | - | - | - | - | 1.5 | - | - | - | - |
| | Novares TM 20 | | - | - | - | 1.4 | - | - | - | - |
| | Rosin solution (60% in xylene) | - | - | - | - | - | - | 2.5 | 5.0 | 7.5 |
| Biocides | Cuprous oxide | 37.0 | 37.0 | 37.0 | 37.0 | 37.0 | 37.0 | 37.0 | 37.0 | 37.0 |
| | Copper pyrithione | 1.6 | 1.6 | 1.6 | 1.6 | 1.6 | 1.6 | 1.6 | 1.6 | 1.6 |
| Pigments and extenders | Iron oxide red | 1.8 | 1.8 | 1.8 | 1.8 | 1.8 | 1.8 | 1.8 | 1.8 | 1.8 |
| | Titanium dioxide | 0.9 | 0.9 | 0.9 | 0.9 | 0.9 | 0.9 | 0.9 | 0.9 | 0.9 |
| | Zinc oxide red seal | 7.6 | 7.6 | 7.6 | 7.6 | 7.6 | 7.6 | 7.6 | 7.6 | 7.6 |
| | Barium sulfate | 5.7 | 5.7 | 5.7 | 5.7 | 5.7 | 5.7 | 5.7 | 5.7 | 5.7 |
| | Talc | 4.3 - | 4.3 | 4.3 | 4.3 | 4.3 | 4.3 | 4.3 | 4.3 | 4.3 |
| Dehydrating agent | Calsium sulfate | 1.1 | 1.1 | 1.1 | 1.1 | 1.1 | 1.1 | 1.1 | 1.1 | 1.1 |
| Thixotropic agent | Disparlon A603-20X ⁽²⁾ | 4.1 | 4.1 | 4.1 | 4.1 | 4.1 | 4.1 | 4.1 | 4.1 | 4.1 |
| Solvent | Xylene | 7.5 | 8.6 | 9.7 | 7.9 | 9.4 | 6.4 | 6.9 | 7.3 | 7.8 |
| Properties | Calculated NVM (vol%) | 50.0 | 50.0 | 50.0 | 50.0 | 50.0 | 50.0 | 50.0 | 50.0 | 50.0 |
| | Calculated VOC (g/L) | 450 | 450 | 450 | 450 | 450 | 450 | 450 | 450 | 450 |

| | | | | | | | | | | |
|---|---|---|---|---|---|---|---|---|---|---|
| (2) Disparlon A603-20X, amide wax, 20% in xylene; available from Kusumoto Chemicals, Ltd. | | | | | | | | | | |

**Table 6: Composition of Antifouling coating examples and comparative examples containing P-3 and AP-10. Ingredients in parts by weight.**

| **Ingredients** | | **Examples** | | | | | | |
|---|---|---|---|---|---|---|---|---|
| | | **Coat 3A** | **Ref 3A** | **Ref 3B** | **Coat 4A** | **Coat 4B** | **Ref 4A** | **Ref 4B** |
| Binders and plasticizers | Polymer P-3 (56% in xylene) | 23.9 | 26.5 | 23.9 | - | - | - | - |
| | AP-10 ⁽³⁾ (50% in xylene) | - | - | - | 26.0 | 23.2 | 28.9 | 26.0 |
| | Novares LC 35 | 1.5 | - | - | 1.4 | - | - | - |
| | Novares TN 80 | - | - | - | - | 1.5 | - | - |
| | Rosin solution (60% in xylene) | - | - | 2.5 | - | - | - | 2.4 |
| | Disflamoll TOF | - | - | - | - | 1.2 | - | - |
| Biocides | Cuprous oxide | 37.8 | 37.8 | 37.0 | 35.8 | 35.8 | 35.8 | 35.8 |
| | Copper pyrithione | 1.6 | 1.6 | 1.6 | 1.5 | 1.5 | 1.5 | 1.5 |
| Pigments and extenders | Iron oxide red | 1.8 | 1.8 | 1.8 | 1.7 | 1.7 | 1.7 | 1.7 |
| | Titanium dioxide | 0.9 | 0.9 | 0.9 | 0.9 | 0.9 | 0.9 | 0.9 |
| | Zinc oxide red seal | 7.8 | 7.8 | 7.6 | - 7.4 | 7.4 | 7.4 | 7.4 |
| | Barium sulfate | 5.8 | 5.8 | 5.7 | 5.5 | 5.5 | 5.5 | 5.5 |
| | Talc | 4.4 | 4.4 | 4.3 | 4.2 | 4.2 | 4.2 | 4.2 |
| Dehydrating agent | Calsium sulfate | 1.1 | 1.1 | 1.1 | 1.1 | 1.1 | 1.1 | 1.1 |
| Thixotropic agent | Disparlon A603-20X ⁽¹⁾ | 4.1 | 4.1 | 4.1 | 4.5 | 4.5 | 4.5 | 4.5 |
| Solvent | Xylene | 9.3 | 8.2 | 8.3 | 10.0 | 11.5 | 8.5 | 9.0 |
| Properties | Calculated NVM (vol%) | 52.0 | 52.0 | 52.0 | 47.0 | 47.0 | 47.0 | 47.0 |
| | Calculated VOC (g/L) | 435 | 435 | 435 | 477 | 477 | 477 | 477 |

| | | | | | | | | |
|---|---|---|---|---|---|---|---|---|
| (2) Disparlon A603-20X, amide wax, 20% in xylene; available from Kusumoto Chemicals, Ltd. (3) AP-10, silylester copolymer, 50% in xylene; available from Nitto Kasei Co., Ltd. | | | | | | | | |

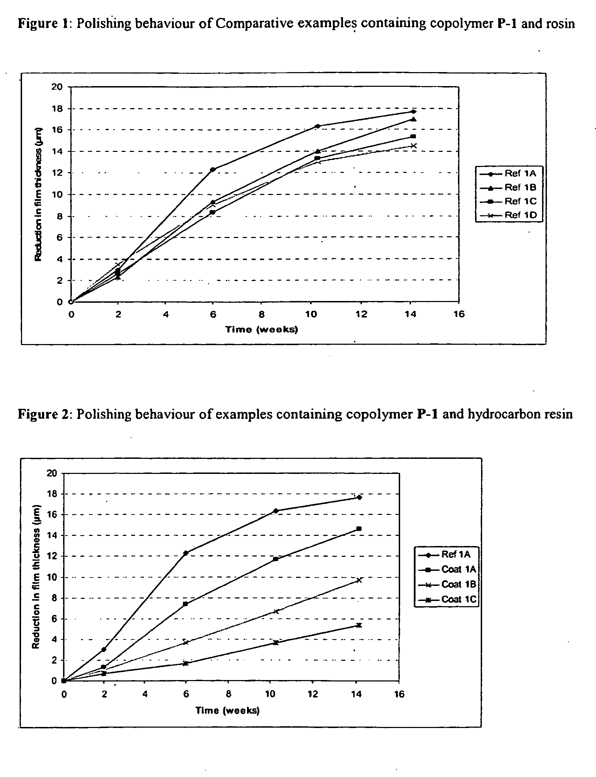

The coating compositions of the invention were then tested to determine their polishing rate following the protocols above. The test results are given in Figures 1 to 5.
Figure 1 shows that different amounts of rosin cannot be used to modify the polishing properties of an antifouling coating comprising copolymer P-1. Despite different comparative formulations having been used there is little difference in the polishing rate.

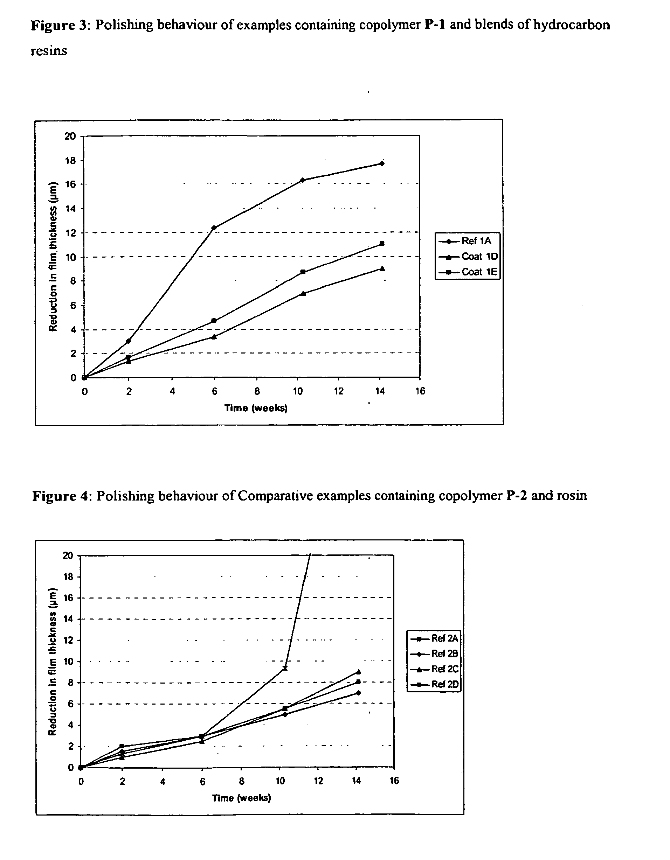

Figure 2 and Figure 3 show that different amounts of a hydrocarbon resin and blends of hydrocarbon resins can adjust the polishing rate and give a more linear and thereby a more controlled polishing.and release of biocidal active components.
Figure 4 shows that rosin can be used to modify the polishing properties of copolymer P-2, but again that different amounts of rosin give the same effect.

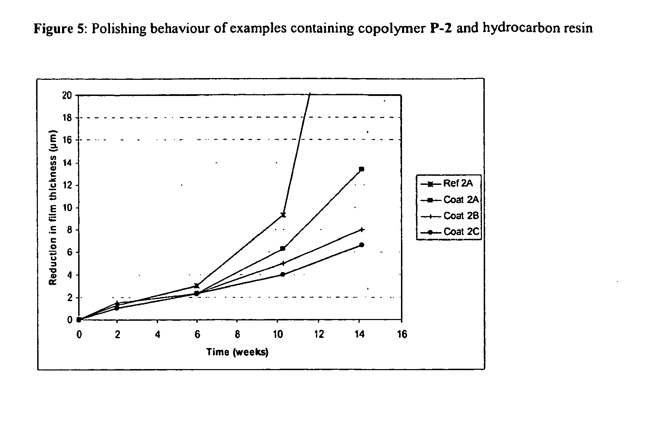

Figure 5 shows that different amounts of hydrocarbon resin can adjust the polishing rate.

Thus coating formulations of the invention are much more flexible than the prior art coatings and allow the opportunity to tailor polishing rate as desired.

## Claims

1. An antifouling coating composition comprising:
(I) a binder component comprising at least one hydrolysable copolymer and at least one hydrocarbon resin wherein the total amount of hydrocarbon resin forms 1 to 50 wt% of the binder component (I); and
(II) at least one an antifouling agent;
wherein said hydrocarbon resin comprises a resin formed by the polymerisation of at least one monomer selected from a C5 aliphatic monomer, a C9 aromatic monomer, an indene coumarone monomer, or a terpene or mixtures thereof.

2. An antifouling coating as claimed in any preceding claim wherein the hydrocarbon resin is formed only from the polymerisation of at least one monomer selected from a C5 aliphatic monomer, a C9 aromatic monomer, an indene coumarone monomer, or a terpene or mixtures thereof.

3. An antifouling coating as claimed in any preceding claim wherein the hydrocarbon resin is a C5 hydrocarbon resin, a C9 hydrocarbon resin, a C5/C9 hydrocarbon resin or an indene-coumarone resin.

4. An antifouling coating as claimed in any preceding claim wherein the hydrocarbon resin is free of any residues of a cyclopentadiene monomer.

5. An antifouling coating as claimed in any preceding claim wherein the hydrocarbon resin is a modified hydrocarbon resin.

6. An antifouling coating as claimed in any preceding claim wherein the hydrocarbon resin has a Mn of 250 to 3000 g/mol.

7. An antifouling coating as claimed in any preceding claim wherein the hydrocarbon resin comprises a mixture of a C5 and a C9 hydrocarbon resins.

8. An antifouling coating as claimed in any preceding claim wherein the hydrocarbon resin forms 1 to 35 wt%,

9. An antifouling coating as claimed in any preceding claim wherein the hydrocarbon resin forms 5 to 15 wt% of the binder component.

10. An antifouling coating as claimed in any preceding claim wherein the hydrocarbon resin is modified but contains less than one polar functionality per molecule.

11. An antifouling coating as claimed in any preceding claim wherein the bromine number of the hydrocarbon resin is less than 65g Br/100g,

12. An antifouling coating as claimed in any preceding claim wherein the bromine number of the hydrocarbon resin is less than 45g Br/100g.

13. A process for protecting from fouling an object surface which is permanently or intermittently underwater comprising coating at least a part of said object with an antifouling coating composition as claimed in claims 1 to 12.

14. An object coated with an antifouling coating composition as hereinbefore defined.

15. A binder comprising at least one hydrolysable copolymer and at least one hydrocarbon resin wherein the total amount of hydrocarbon resin forms 1 to 50 wt% of the binder component wherein said hydrocarbon resin comprises a resin formed by the polymerisation of at least one of a C5 aliphatic monomer, a C9 aromatic monomer, an indene coumarone monomer, or a terpene monomer.

## Patentansprüche

1. Antifoulingbeschichtungszusammensetzung, umfassend:
(I) einen Bindemittelbestandteil, der mindestens ein hydrolysierbares Copolymer und mindestens ein Kohlenwasserstoffharz umfasst, wobei der Gesamtgehalt an Kohlenwasserstoffharz 1 bis 50 Gew.-% des Bindemittelbestandteils (I) bildet; und
(II) mindestens ein Antifoulingmittel;
wobei das Kohlenwasserstoffharz ein Harz umfasst, das durch die Polymerisation mindestens eines Monomers, ausgewählt aus einem aliphatischen C5-Monomer, einem aromatischen C9-Monomer, einem Inden-Cumaron-Monomer oder einem Terpen, oder von Gemischen derselben gebildet wird.

2. Antifoulingbeschichtung nach einem der vorangehenden Ansprüche, wobei das Kohlenwasserstoffharz nur aus der Polymerisation mindestens eines Monomers, ausgewählt aus einem aliphatischen C5-Monomer, einem aromatischen C9-Monomer, einem Inden-Cumaron-Monomer oder einem Terpen, oder von Gemischen derselben ausgebildet wird.

3. Antifoulingbeschichtung nach einem der vorangehenden Ansprüche, wobei das Kohlenwasserstoffharz ein C5-Kohlenwasserstoffharz, ein C9-Kohlenwasserstoffharz, ein C5/C9-Kohlenwasserstoffharz oder ein Inden-Cumaron-Harz ist.

4. Antifoulingbeschichtung nach einem der vorangehenden Ansprüche, wobei das Kohlenwasserstoffharz frei von jeglichen Resten eines Cyclopentadienmonomers ist.

5. Antifoulingbeschichtung nach einem der vorangehenden Ansprüche, wobei das Kohlenwasserstoffharz ein modifiziertes Kohlenwasserstoffharz ist.

6. Antifoulingbeschichtung nach einem der vorangehenden Ansprüche, wobei das Kohlenwasserstoffharz eine Mn von 250 bis 3000 g/mol aufweist.

7. Antifoulingbeschichtung nach einem der vorangehenden Ansprüche, wobei das Kohlenwasserstoffharz ein Gemisch eines C5- und eines C9-Kohlenwasserstoffharzes umfasst.

8. Antifoulingbeschichtung nach einem der vorangehenden Ansprüche, wobei das Kohlenwasserstoffharz 1 bis 35 Gew.-% bildet.

9. Antifoulingbeschichtung nach einem der vorangehenden Ansprüche, wobei das Kohlenwasserstoffharz 5 bis 15 Gew.-% des Bindemittelbestandteils bildet.

10. Antifoulingbeschichtung nach einem der vorangehenden Ansprüche, wobei das Kohlenwasserstoffharz modifiziert ist, aber weniger als eine polare funktionelle Gruppe pro Molekül enthält.

11. Antifoulingbeschichtung nach einem der vorangehenden Ansprüche, wobei die Bromzahl des Kohlenwasserstoffharzes weniger als 65 g Br/100 g beträgt.

12. Antifoulingbeschichtung nach einem der vorangehenden Ansprüche, wobei die Bromzahl des Kohlenwasserstoffharzes weniger als 45 g Br/100 g beträgt.

13. Verfahren zum Schutz einer dauerhaft oder zeitweise unter Wasser befindlichen Objektoberfläche gegen Fouling, welches das zumindest teilweise Beschichten des Objekts mit einer Antifoulingbeschichtungszusammensetzung nach den Ansprüchen 1 bis 12 umfasst.

14. Objekt, das mit einer Antifoulingbeschichtungszusammensetzung wie vorstehend hierin definiert beschichtet ist.

15. Bindemittel, das mindestens ein hydrolysierbares Copolymer und mindestens ein Kohlenwasserstoffharz umfasst, wobei die Gesamtmenge an Kohlenwasserstoffharz 1 bis 50 Gew.-% des Bindemittelbestandteils bildet, wobei das Kohlenwasserstoffharz ein Harz umfasst, das durch die Polymerisation mindestens eines der folgenden ausgebildet wird: eines aliphatischen C5-Monomers, eines aromatischen C9-Monomers, eines Inden-Cumaron-Monomers oder eines Terpen-Monomers.

## Revendications

1. Composition de revêtement antisalissure comprenant :
(I) un composant liant comprenant au moins un copolymère hydrolysable et au moins une résine hydrocarbonée, dans lequel la quantité totale de résine hydrocarbonée représente 1 à 50 % en poids du composant liant (I) ; et
(II) au moins un agent antisalissure ;
dans laquelle ladite résine hydrocarbonée comprend une résine formée par polymérisation d'au moins un monomère choisi parmi un monomère aliphatique en C₅, un monomère aromatique en C₉, un monomère de coumarone-indène ou d'un terpène, ou des mélanges de ceux-ci.

2. Revêtement antisalissure selon l'une quelconque des revendications précédentes, dans lequel la résine hydrocarbonée n'est formée que par polymérisation d'au moins un monomère choisi parmi un monomère aliphatique en C₅, un monomère aromatique en C₉, un monomère de coumarone-indène ou d'un terpène, ou de mélanges de ceux-ci.

3. Revêtement antisalissure selon l'une quelconque des revendications précédentes, dans lequel la résine hydrocarbonée est une résine hydrocarbonée en C₅, une résine hydrocarbonée en C₉, une résine hydrocarbonée en C₅-C₉ ou une résine de coumarone-indène.

4. Revêtement antisalissure selon l'une quelconque des revendications précédentes, dans lequel la résine hydrocarbonée est exempte de résidus quelconques d'un monomère de cyclopentadiène.

5. Revêtement antisalissure selon l'une quelconque des revendications précédentes, dans lequel la résine hydrocarbonée est une résine hydrocarbonée modifiée.

6. Revêtement antisalissure selon l'une quelconque des revendications précédentes, dans lequel la résine hydrocarbonée a une Mn de 250 à 3 000 g/mole.

7. Revêtement antisalissure selon l'une quelconque des revendications précédentes, dans lequel la résine hydrocarbonée comprend un mélange de résines hydrocarbonées en C₅ et C₉.

8. Revêtement antisalissure selon l'une quelconque des revendications précédentes, dans lequel la résine hydrocarbonée représente 1 à 35 % en poids.

9. Revêtement antisalissure selon l'une quelconque des revendications précédentes, dans lequel la résine hydrocarbonée représente 5 à 15 % en poids du composant liant.

10. Revêtement antisalissure selon l'une quelconque des revendications précédentes, dans lequel la résine hydrocarbonée est modifiée, mais contient moins d'une fonctionnalité polaire par molécule.

11. Revêtement antisalissure selon l'une quelconque des revendications précédentes, dans lequel l'indice de brome de la résine hydrocarbonée est inférieur à 65 g de Br pour 100 g.

12. Revêtement antisalissure selon l'une quelconque des revendications précédentes, dans lequel l'indice de brome de la résine hydrocarbonée est inférieur à 45 g de Br pour 100 g.

13. Procédé de protection contre les salissures d'une surface d'objet, qui est en permanence ou par intermittence sous l'eau, comprenant le revêtement d'au moins une partie dudit objet avec une composition de revêtement antisalissure selon les revendications 1 à 12.

14. Objet revêtu d'une composition de revêtement antisalissure telle que définie ci-dessus.

15. Liant comprenant au moins un copolymère hydrolysable et au moins une résine hydrocarbonée, dans lequel la quantité totale de résine hydrocarbonée représente 1 à 50 % en poids du composant liant, dans lequel ladite résine hydrocarbonée comprend une résine formée par polymérisation d'au moins un composé choisi parmi un monomère aliphatique en C₅, un monomère aromatique en C₉, un monomère de coumarone-indène ou un monomère de terpène.
